# EUROPEAN PATENT APPLICATION

(11) **EP 4 362 308 A1**
(43) Date of publication of application: **01.05.2024**
(21) Application number: 22828387.5
(22) Date of filing: 20.06.2022
(51) Int. Cl.: H02M 7/48, H02M 7/06

(54) **HIGH HARMONIC SUPPRESSION DEVICE**

(30) Priority: 25.06.2021 JP 2021105347
(71) Applicant: Toshiba Carrier Corporation, Kawasaki-Shi, Kanagawa 212-8585 (JP)
(72) Inventor: ARAI, Takuro, Kawasaki-shi, Kanagawa 212-0013 (JP); KANEKO, Takahiro, Kawasaki-shi, Kanagawa 212-0013 (JP); KUBOTA, Yohei, Fuji-shi, Shizuoka 416-8521 (JP); KANAMORI, Masaki, Fuji-shi, Shizuoka 416-8521 (JP); NISHIO, Motoki, Fuji-shi, Shizuoka 416-8521 (JP); NUKUSHINA, Harunobu, Fuji-shi, Shizuoka 416-8521 (JP)
(74) Representative: Gramm, Lins & Partner Patent- und Rechtsanwälte PartGmbB
(86) International application number: PCT/JP2022/024555
(87) International publication number: WO 2022/270470

(57) **Abstract**

A high harmonic suppression device includes a power converter connected to a system line between an AC system and a load to generate and output an AC voltage to the system line, and control unit configured to detect a high harmonic component of a load current flowing in the system line, obtain a target value of a compensation current to be added to the load current in order to suppress the high harmonic component, and multiply the target value by a gain based on an impedance between the system line and the power converter, thereby obtain a compensation voltage necessary to supply the compensation current of the target value to the system line and cause the compensation voltage to be generated and output by the power converter.

## Description

### Technical Field

Embodiments described herein relate generally to a high harmonic suppression device for suppressing high harmonics.

### Background Art

When a load with nonlinear characteristics such as a diode rectifier is connected to an AC system, high harmonic components are generated in the current flowing through the load (load current). Since this harmonic current adversely affects other loads through the AC system, how to suppress it is an important issue.

As a countermeasure, there is a high harmonic suppression device which supplies a compensation current to be added to the load current to the system line between the AC system and the load in order to suppress high harmonics. This high harmonic suppression device obtains the deviation between a target value of the compensation current and an actually flowing compensation current, obtains a compensation voltage required to supply the compensation current by proportional/integral calculation (feedback control) using the deviation as an input, and supplies the compensation voltage to a system line.

### Citation List

### Patent Literature

Patent Literature 1: JP H01-227630 A
Patent Literature 2: JP 5713044 B

### Summary of Invention

### Technical Problem

High frequency components are contained in the high harmonics. In order to perform suppression which also follows the high frequency components, the gain of the proportional/integral calculation needs to be increased. However, when the gain is increased, delay and resonance occur, i.e., the control becomes unstable. As a result, an increase in high harmonics is rather caused.

Embodiments described herein aim to provide a high harmonic suppression device capable of reliably suppressing even high harmonics containing high frequency components.

### Solution to Problem

A high harmonic suppression device of claim 1 includes: a power converter connected to a system line between an AC system and a load to generate and output an AC voltage to the system line; and control unit configured to detect a high harmonic component of a load current flowing in the system line, obtain a target value of a compensation current to be added to the load current in order to suppress the high harmonic component, and multiply the target value by a gain based on an impedance between the system line and the power converter, thereby obtain a compensation voltage necessary to supply the compensation current of the target value to the system line and cause the compensation voltage to be generated and output by the power converter.

### Brief Description of Drawings

FIG. 1 is a block diagram showing a configuration of each embodiment.
FIG. 2 is a block diagram showing a configuration of a control unit according to the first embodiment.
FIG. 3 is a block diagram showing a configuration of a feedback control section in FIG. 2.
FIG. 4 is a block diagram showing a configuration of a modified example of FIG. 3.
FIG. 5 is a block diagram showing a configuration of a control unit according to the second embodiment.
FIG. 6 is a chart showing waveforms of an AC voltage, a load current, a system current, and a compensation current of two phases in each embodiment.
FIG. 7 is a chart showing the waveform of the system current and waveforms of a d-axis component and a q-axis component of the compensation current in FIG. 6.
FIG. 8 is a chart showing the waveform of the system current and waveforms of a d-axis component and a q-axis component of the compensation current in prior art as references.

### Mode for Carrying Out the Invention

### [1] A first embodiment of the invention will be described with reference to the accompanying drawings.

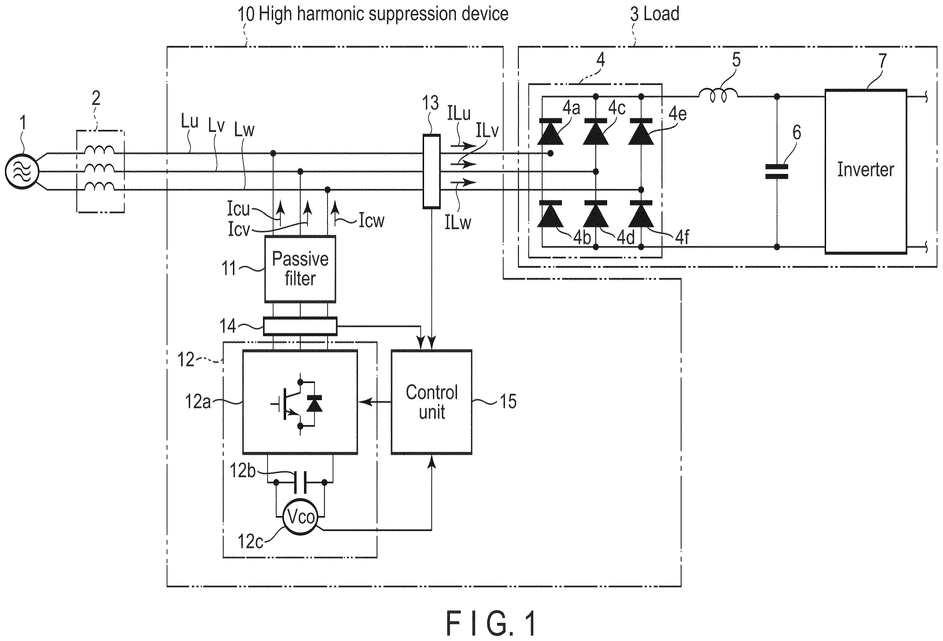

As shown in FIG. 1, a load 3 is connected to system lines (power supply lines) Lu, Lv, and Lw of a three-phase AC system (including a three-phase AC power supply, a power system, a distribution system, and the like) 1 via a system impedance 2.

The load 3 includes a three-phase rectifier circuit 4 that rectifies full waves of the AC voltages (system voltages) Eu, Ev, and Ew of the three-phase AC system 1 by bridge connection of diodes 4a to 4f, which are loads having nonlinear characteristics, a DC capacitor 6 connected to an output terminal of the three-phase rectifier circuit 4 via a DC reactor 5, an inverter 7 connected to both ends of the DC capacitor 6, and the like. The inverter 7 converts the voltage of the DC capacitor 6 into an AC voltage of a predetermined frequency by switching, and outputs the AC voltage as, for example, drive power for a compressor motor of an air conditioner.

A high harmonic suppression device 10 of the embodiment is connected to a position between the system impedance 2 and the load 3 in the system lines Lu, Lv, and Lw.

The high harmonic suppression device 10 includes a passive filter 11 for system connection, a power converter 12 connected to the system lines Lu, Lv, and Lw via the passive filter 11, a detector (first detection section) 13 arranged between the connection position of the passive filter 11 in the system lines Lu, Lv, and Lw and the load 3 to detect AC voltages Eu, Ev, and Ew of the three-phase AC system 1 and currents (referred to as load currents) ILu, ILv, and ILw flowing to the load 3, a detector (second detection section) 14 arranged in a connection between the passive filter 11 and the power converter 12 to detect compensation currents (also referred to as output currents) Icu, Icv, and Icw which are supplied from the power converter 12 to the system lines Lu, Lv, and Lw, and a control unit (control means) 15 that controls the power converter 12 in accordance with the detection results of the detectors 13 and 14.

The passive filter 11 is, for example, an interconnection reactor arranged for each phase of the system lines Lu, Lv, and Lw, or an LCL filter arranged for each phase of the system lines Lu, Lv, and Lw by combining the inductor and the capacitor.

The power converter 12 is, for example, a three-phase two-level converter, includes a switching circuit 12a including a plurality of semiconductor switch elements, a DC capacitor 12b connected between both ends of the switching circuit 12a, and a voltage detector 12c that detects a voltage Vco of the DC capacitor 12b, and generates a three-phase voltage according to a command (request) from the control unit 15 and outputs the voltage to the system lines Lu, Lv, and Lw by switching of the switching circuit 12a and energization of the DC capacitor 12b accompanying the switching. The high harmonic components contained in the load currents ILu, ILv, and ILw are suppressed by supplying the compensation currents Icu, Icv, and Icw generated by the three-phase voltage from the power converter 12 to the system lines Lu, Lv, and Lw.

The control unit 15 detects the high harmonic components contained in the load currents ILu, ILv, and ILw detected by the detector 13, obtains target values Icu', Icv', and Icw' of the compensation currents Icu, Icv, and Icw, which are to be added to the load currents ILu, ILv, and ILw in order to suppress the high harmonic components, and multiplies the target values Icu', Icv', and Icw' by a gain G based on an impedance Z between the system lines Lu, Lv, and Lw and the power converter 12, thereby obtains the compensation voltages Vcu, Vcv, and Vcw required to supply the compensation currents Icu, Icv, and Icw of the target values Icu', Icv', and Icw' to the system lines Lu, Lv, and Lw, and cause the compensation voltages Vcu, Vcv, and Vcw to be generated and output by the power converter 12.

The compensation currents Icu, Icv, and Icw to be added to the load currents ILu, ILv, and ILw in order to suppress the high harmonic components are, specifically, currents to be added to the load currents ILu, ILv, and ILw in order to make the load currents ILu, ILv, and ILw as close to sine waves synchronized with the AC voltages Eu, Ev, and Ew as possible.

The impedance Z between the system lines Lu, Lv, and Lw and the power converter 12 is a ratio of the voltage to the current in the electric circuit between the system lines Lu, Lv, and Lw and the power converter 10, and is determined by the impedance of the passive filter 11 which exists in the connection between the system lines Lu, Lv, and Lw and the power converter 12. The impedance of the passive filter 11 is generally composed of one or more of an interconnection reactor Lac, a filter reactor Lf, a filter capacitor Cf, and a resistor R.

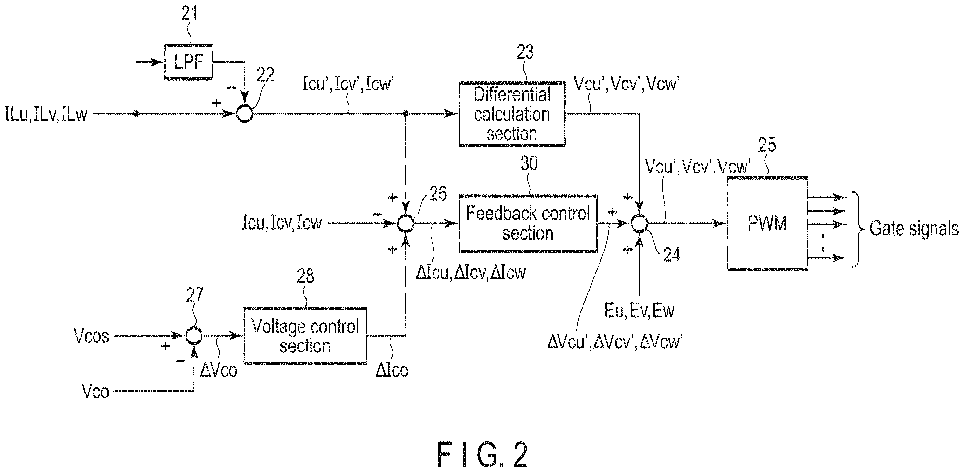

A specific configuration of the control unit 15 is shown in FIG. 2.

Values of the load currents ILu, ILv, and ILw detected by the detector 13 are supplied to a low-pass filter (extraction section) 21 and a calculation unit (first calculation section) 22. The low-pass filter 21 extracts low frequency components of the values of the load currents ILu, ILv, and ILw detected by the detector 13. The calculation unit 22 detects the high harmonic components contained in the load currents ILu, ILv, and ILw by subtracting the low-frequency components extracted by the low-pass filter 21 from the values of the load currents ILu, ILv, and ILw detected by the detector 13. Then, the calculation unit 22 calculates target values (command values) Icu', Icv', and Icw' of the compensation currents Icu, Icv, and Icw which are to be added to the load currents ILu, ILv, and ILw in order to suppress the detected high harmonic components. This calculation result is supplied to a differential calculation unit (second calculation section) 23.

The differential calculation unit 23 calculates the target values Icu', Icv', and Icw' of the compensation voltages Vcu, Vcv, and Vcw necessary to make the compensation voltages Vcu, Vcv, and Vcw of the target values Icu', Icv', and Icw' supplied to the system lines Lu, Lv, and Lw, by holding in advance a predetermined gain G including the impedance Z between the system lines Lu, Lv, and Lw and the power converter 12, and multiplying the target values Icu', Icv', and Icw' calculated by the calculation unit 22 by the gain.

The gain G is set based on the impedance Z. More specifically, the gain includes the impedance Z and a time differential term "d/dt" for the target values Icu', Icv', and Icw'. For example, if the impedance Z is the interconnection reactor Lac, a product "Lac × (d/dt)" of the interconnection reactor Lac and the time differential term "d/dt" for the target values Icu', Icv', and Icw' is assumed to be a gain G. In this case, Vcu' = [Lac × (dlcu'/dt)],
Vcv' = [Lac × (dIcv'/dt)], and
Vcw' = [Lac × (dIcw'/dt)] are obtained as the target values Vcu', Vcv', and Vcw' of the compensation voltages Vcu, Vcv, and Vcw.

If the impedance Z is the interconnection reactor Lac and the resistance R of the reactor, "Lac × (d/dt)+R" obtained by adding the resistance R to the product of the interconnection reactor Lac and the time differential term "d/dt" for the target values Icu', Icv', and Icw' is assumed to be the gain G. In this case, Vcu'=[Lac × (dlcu'/dt)+R], Vcv' = [Lac × (dIcv'/dt)+R], and Vcw' = [Lac × (dIcw'/dt)+R] are obtained as the target values Vcu', Vcv', and Vcw' of the compensation voltages Vcu, Vcv, and Vcw.

In addition, if the passive filter is an LCL filter composed of the interconnection reactor Lac, the filter capacitor Cf, and the filter reactor Lf, product "(Lac+Lf) × (d/dt)+Lac × Lf × Cf × (d^3/dt^3)" using the interconnection reactor Lac, the filter reactor Lf, the differential term "d/dt" for the target values Icu', Icv', and Icw', and a third order differential term "d^3/dt^3" is assumed to be the gain G. However, since the purpose of the filter capacitor Cf is to eliminate a switching ripple component, the third order differential term can be ignored. In this case, Vcu' = [(Lac+Lf) × (dIcu'/dt)], Vcv' = [(Lac+Lf) × (dIcv'/dt)], and Vcw' = [(Lac+Lf) × (dIcw'/dt)] are obtained as the target values Vcu', Vcv', and Vcw' of the compensation voltages Vcu, Vcv, and Vcw.

Incidentally, when differential calculation is implemented in a digital controller, it is common to combine an appropriate LPF in consideration of the calculation time and implement the differential calculation as an incomplete differential.

The calculated target values Vcu', Vcv', and Vcw' are supplied to a pulse width modulation circuit (PWM; drive section) 25 via an addition unit 24. The pulse width modulation circuit 25 generates and outputs a plurality of gate signals (on and off signals) for driving the switching circuit 12a of the power converter 12 by pulse-width modulating the sinusoidal voltages of the same frequency as the AC voltages Eu, Ev, and Ew detected by the detector 13 with the target values Vcu', Vcv', and Vcw'.

Each of switching elements of the switching circuit 12a of the power converter 12 is turned on and off by these gate signals, and the compensation voltages Vcu, Vcv, and Vcw of the target values Vcu', Vcv', and Vcw' are thereby output from the power converter 12. According to this output, the compensation currents Icu, Icv, and Icw of target values Icu', Icv', and Icw' flow from the power converter 12 to the system lines Lu, Lv, and Lw. The high harmonic components contained in the load currents ILu, ILv, and ILw are suppressed by the compensation currents Icu, Icv, and Icw.

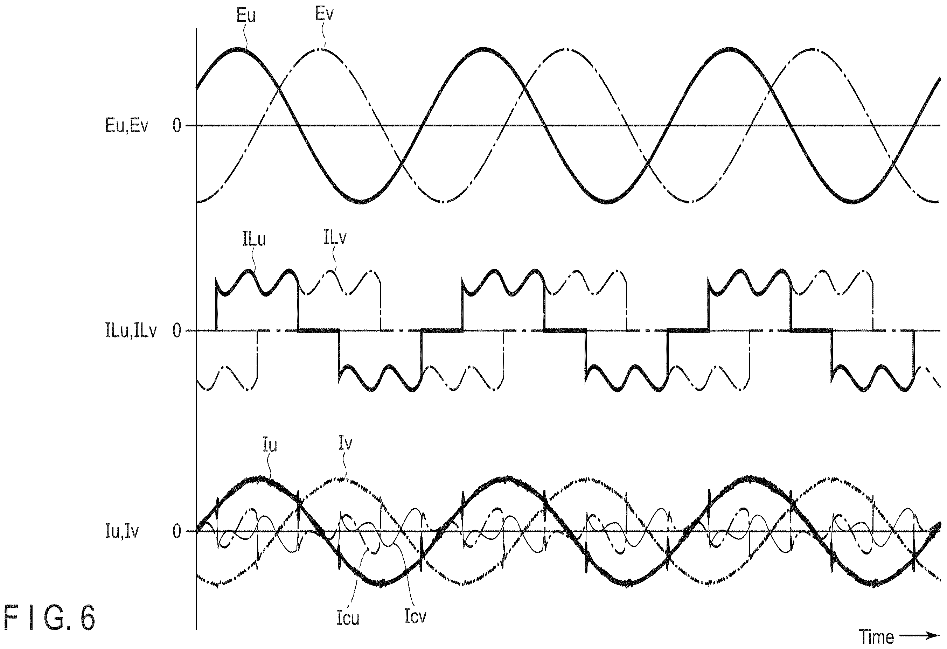

Waveforms of the AC voltages Eu and Ev extracted from two phases in the three-phase AC system 1, waveforms of the load currents ILu and ILv, waveforms of the system currents Iu and Iv in the three-phase AC system 1, and waveforms of the compensation currents Icu and Icv are shown in FIG. 6.

As described above, the compensation voltages Vcu, Vcv, and Vcw required for the compensation currents Icu, Icv, and Icw of the target values Icu', Icv', and Icw' to be supplied to the system lines Lu, Lv, and Lw can be obtained directly from the target values Icu', Icv', and Icw' by detecting the high harmonic components contained in the load currents ILu, ILv, and ILw, calculating the target values Icu', Icv', and Icw' of the compensation currents Icu, Icv, and Icw to be added to the load currents ILu, ILv, and ILw in order to suppress the high harmonic components, are multiplying the gain G for the target values Icu', Icv', and Icw'. Therefore, the appropriate compensation voltages Vcu, Vcv, and Vcw capable of sufficiently dealing with the high harmonics including high frequency components can be obtained without causing delay or resonance, unlike the conventional device in which gains in proportional/integral calculation need to be increased.

In other words, in the conventional high harmonic suppression device that obtains the compensation voltage by proportional/integral calculation, the gain of the proportional/integral calculation needs to be increased in order to deal with high harmonics including high frequency components as well, delay and resonance thereby occur, i.e., the control becomes unstable, which rather causes increase in the high harmonics, but high harmonics including high frequency components can be reliably suppressed by directly obtaining the compensation voltages Vcu, Vcv, and Vcw from the target values Icu', Icv', and Icw'.

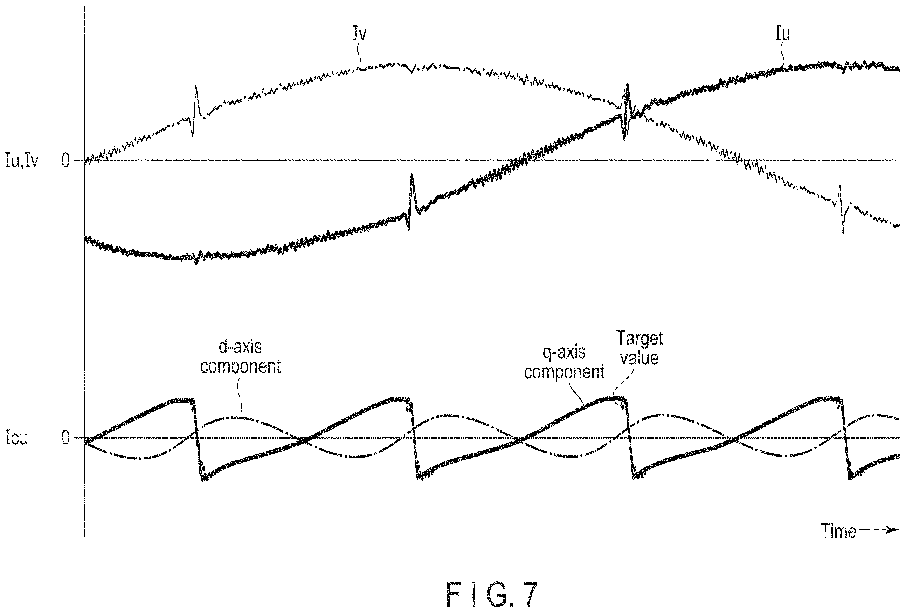

FIG. 7 shows the waveforms of the system currents Iu and Iv in the embodiment in a temporally enlarged manner, and shows one compensation current Icu in the embodiment, as a waveform of a d-axis component and a waveform of a q-axis component whose phase is electrically shifted from the d-axis component by 90 degrees. According to this embodiment, the d-axis component and the q-axis component can be made to appropriately follow the target values, respectively.

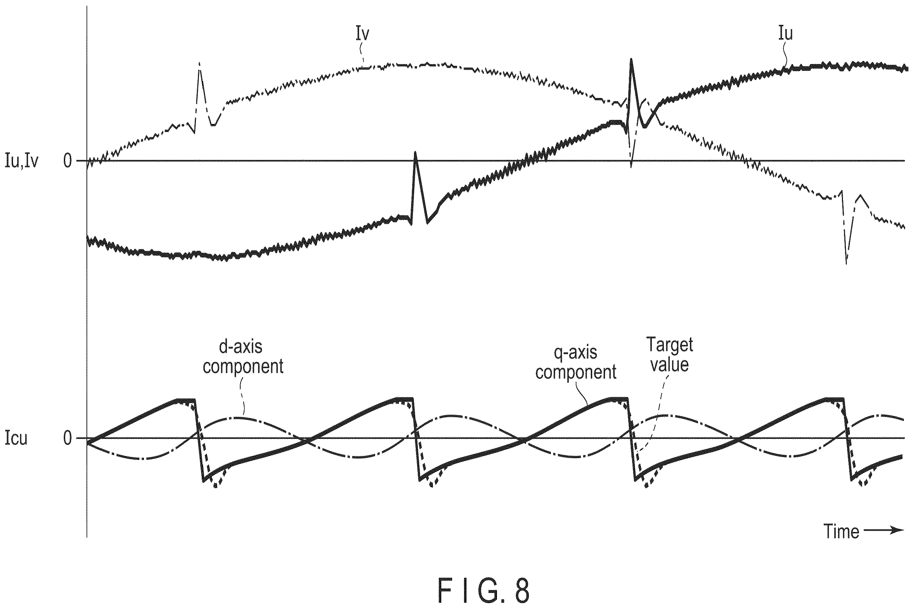

In contrast, in the case of the conventional device that obtains the compensation voltage by the proportional/integral calculation, the compensation currents do not appropriately follow the target values and appear as large harmonic noise in the waveforms of the system currents Iu and Iv as shown in FIG. 8. Such an inconvenience can be solved in the embodiment.

As shown in FIG. 2, in order to deal with unnecessary fluctuations in the AC voltages Eu, Ev, and Ew, the values of the AC voltages Eu, Ev, and Ew detected by the detector 13 are supplied to the addition unit 24, and the values of the AC voltages Eu, Ev, and Ew are added to the target values Vcu', Vcv', and Vcw' in the addition unit 24. The target values Vcu', Vcv', and Vcw' passed through the addition unit 24 are supplied to the pulse width modulation circuit 25. The inconvenience that unnecessary fluctuations in the AC voltages Eu, Ev, and Ew overlap with the compensation voltages Vcu, Vcv, and Vcw can be thereby solved.

In addition, in order to deal with unexpected disturbances to the compensation currents Icu, Icv, and Icw and assumed errors in the impedance Z, and also to keep the voltage Vco of the DC capacitor 12b in the power converter 12 constant at a standard value, a calculation unit (third calculation section) 26, a calculation unit (fourth calculation section) 27, a voltage control section 28, and a feedback control section 30 are added to the control unit 15 as shown in FIG. 2.

The calculation section 26 obtains deviations (Icu'-Icu), (Icv'-Icv), and (Icw'-Icw) between the target values Icu', Icv', and Icw' calculated by the calculation section 22 and the actual compensation current values Icu, Icv, and Icw detected by the detector 14. The calculation section 27 obtains a deviation ΔVco between a standard value Vcos predetermined for the voltage Vco of the capacitor 12b in the power converter 12 and the actual voltage Vco of the capacitor 12b detected by the voltage detector 12c of the power converter 12.

The voltage control section 28 obtains a correction value ΔIco that is to be added to the above-described obtained deviations (Icu'-Icu), (Icv'-Icv), and (Icw'-Icw) to constantly maintain the voltage Vco of the capacitor 12b to the standard value Vcos, by multiplying the deviation ΔVco obtained by the calculation section 27 by a predetermined voltage control gain. The calculation section 26 outputs the deviations ΔIcu, ΔIcv, and ΔIcw obtained by adding the correction value ΔIco to the above-described obtained deviation.

The feedback control section 30 obtains correction values ΔVcu', ΔVcv', and ΔVcw' that are to be added to the target values Vcu', Vcv', and Vcw' calculated by the differentiation calculation section 23, by proportional calculation or proportional/integral calculation using the deviations ΔIcu, ΔIcv, and ΔIcw output from the calculation section 26 as inputs, such that the deviations ΔIcu, ΔIcv, and ΔIcw obtained by the calculation section 26 become zero. The obtained correction values ΔVcu', ΔVcv', and ΔVcw' are added to the target values Vcu', Vcv', and Vcw' in the addition section 24. As a result, stable and appropriate compensation voltages Vcu, Vcv, and Vcw that can constantly maintain the voltage Vco of the capacitor 12b in the power converter 12 at the standard value can be obtained without being greatly affected by unexpected disturbances to the compensation currents Icu, Icv, and Icw or assumed errors in the impedance Z.

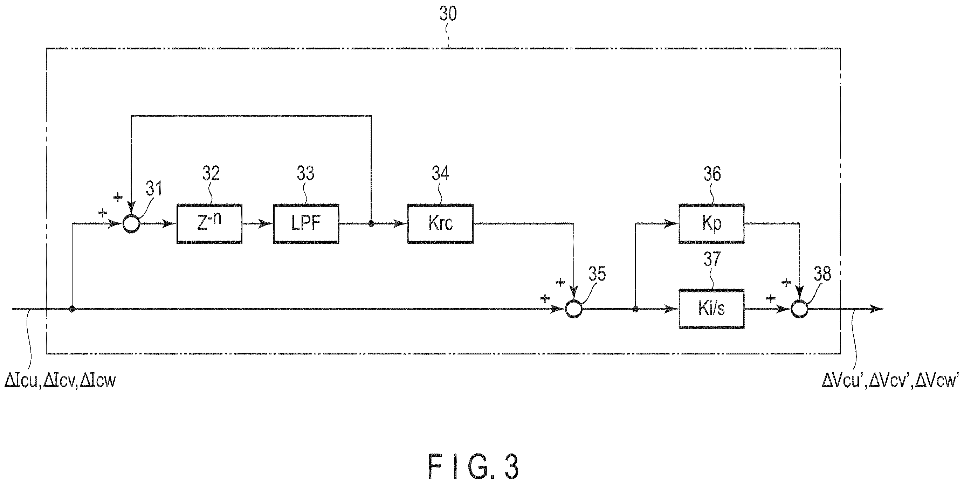

As shown in FIG. 3, for example, the feedback control section 30 sums while holding and integrating the deviations ΔIcu, ΔIcv, and ΔIcw supplied from the calculation section 26 for each cycle by a loop configuration of an addition section 31, a holding section 32, and an integrating section (LPF) 33, multiplies the summation result by a predetermined loop gain Krc for loop control by a multiplying section 34, and adds the multiplication result to the deviations ΔIcu, ΔIcv, and ΔIcw supplied from the calculation section 26, in an addition section 35. Then, the feedback control section 30 multiplies the deviations ΔIcu, ΔIcv, and ΔIcw that have passed through the addition section 35 by a proportional gain Kp in a proportional calculation section 36, and simultaneously multiplies the deviations by an integral gain Ki/s in the integral calculation section 37, and adds the multiplication results by an addition section 38 to obtain the correction values ΔVcu', ΔVcv', and ΔVcw' that are to be added to the target values Vcu', Vcv', and Vcw' calculated by the differential calculation section 23 such that the deviations ΔIcu, ΔIcv, and ΔIcw obtained in the calculation section 26 become zero.

The unit sums while holding and integrating the deviations ΔIcu, ΔIcv, and ΔIcw for each cycle of the AC voltages Eu, Ev and Ew, multiplies the summation result by the loop gain Krc, and thereby reduces periodic errors in the deviations ΔIcu, ΔIcv, and ΔIcw.

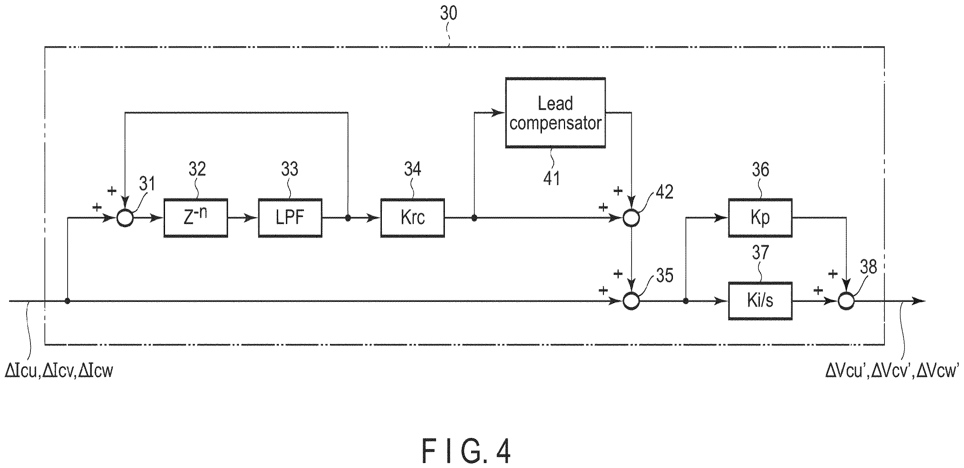

The feedback control section 30 may be configured to multiply the multiplication result obtained by the loop configuration of the addition section 31, the holding section 32, and the integration section (LPF) 33 by the loop gain Krc in the multiplication section 34 and to add a lead compensation process of the loop configuration of a lead compensator 41 and an addition section 42 to the multiplication result, as shown in FIG. 4. By adding the lead compensation process, it is possible to compensate for the delay time of the process due to the proportional/integral calculation of the proportional calculation section 36 and the integral calculation section 37.

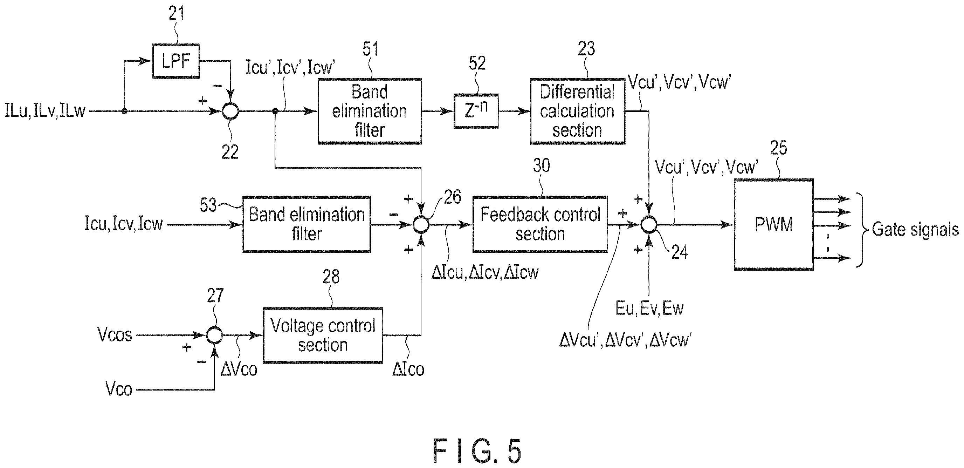

### [2] A configuration of a control unit 15 in a second embodiment of the present invention is shown in FIG. 5.

A band elimination filter (first band elimination section) 51 and a holding unit 52 are sequentially arranged on a signal path from a calculation section 22 for calculating target values Icu', Icv', and Icw' to a differential calculation section 23 for calculating the target values Icu', Icv', and Icw'. Furthermore, a band elimination filter (second band elimination section) 52 is arranged on a signal path from a detector 14 for detecting values of compensation currents Icu, Icv, and Icw to a calculation section 26 for obtaining deviations ΔIcu, ΔIcv, and ΔIcw.

When a passive filter 11 on the output side of a power converter 12 is an LCL filter, the band elimination filter 51 eliminates a predetermined frequency band of the target values Icu', Icv', and Icw' calculated in the calculation section 22 to avoid resonance in the LCL filter. When resonance occurs in the LCL filter, unintended high harmonic components may overlap with the compensation currents Icu, Icv, and Icw output from the power converter 12 and, therefore, the resonance is avoided by the band elimination process for the target values Icu', Icv', and Icw'.

The holding section 52 temporarily holds the target values Icu', Icv', and Icw' that have passed through the band elimination filter 51 in one cycle of AC voltages Eu, Ev, and Ew in order to compensate for deviations between the target values Icu', Icv', and Icw' and the actual compensation currents Icu, Icv, and Icw due to control delay and detection delay.

The band elimination filter 52 is, for example, a notch filter, and eliminates a predetermined frequency band of the compensation currents Icu, Icv, and Icw detected by the detector 14 in order to solve an inconvenience that high harmonic components resulting from employment of a feedback control section 30 are made to overlap with the compensation currents Icu, Icv, and Icw detected by the detector 14 and to solve an inconvenience that the high harmonic components are amplified by the gain of the feedback control section 30.

### [3] Modified Example

In each of the above embodiments, a three-phase two-level converter is used as the power converter 12, but is not limited and a multi-level converter may be used.

The control of the control unit 15 may be configured to be divided into control of the d-axis component having the same phase as the AC voltages Eu, Ev, and Ew, and control of the q-axis component whose phase is electrically shifted from the d-axis component by 90 degrees, by rotational coordinate transformation based on the phases of the AC voltages Eu, Ev, and Ew. Interference terms between the phases and between the d-axis and the q-axis in the power converter 12 can be thereby eliminated. If the load currents ILu, ILv, and ILw are subjected to rotational coordinate transformation, the target values Icu', Icv', and Icw' of the load currents ILu, ILv, and ILw can be obtained by extracting only the DC amount from the load currents ILu, ILv, and ILw containing the high harmonic components and by subtracting it from the original load currents ILu, ILv, and ILw.

While certain embodiments and modification examples have been described, they have been presented by way of example only, and are not intended to limit the scope of the inventions. Indeed, these embodiments described herein may be embodied in a variety of other forms; furthermore, various omissions, substitutions and changes in the form of the embodiment described herein may be made without departing from the spirit of the invention. The accompanying claims and their equivalents are intended to cover such forms or modifications as would fall within the scope and spirit of the inventions.

### Reference Signs List

1 ... System power supply, 2 ... Load, Lu, Lv, and Lw ... System lines, 10 ... High harmonic suppression device, 11 ... Passive filter, 12 ... Power converter, 12a ... Switching circuit, 12b ... Capacitor, 12c ... Voltage detector, 13 and 14 ... Detectors, 15 ... Control unit, 21 ... Low-pass filter (extraction section), 22 ... Calculation unit (first calculation section), 23 ... Differential calculation unit (second calculation section), and 25 ... Pulse width modulation circuit (drive section).

## Claims

1. A high harmonic suppression device, comprising:
a power converter connected to a system line between an AC system and a load to generate and output an AC voltage to the system line; and
control unit configured to detect a high harmonic component of a load current flowing in the system line, obtain a target value of a compensation current to be added to the load current in order to suppress the high harmonic component, and multiply the target value by a gain based on an impedance between the system line and the power converter, thereby obtain a compensation voltage necessary to supply the compensation current of the target value to the system line and cause the compensation voltage to be generated and output by the power converter.

2. The high harmonic suppression device of claim 1, wherein
the gain includes the impedance and also includes a time differential term for the target value.

3. The high harmonic suppression device of claim 1, further comprising:
a passive filter for system connection, which is provided in a connection between the system line and the power converter.

4. The high harmonic suppression device of claim 1, wherein
the control unit includes:
first detection section configured to detect the load current;
extraction section configured to extract a low frequency component of the load current detected by the first detection section;
first calculation section configured to detect the high harmonic component included in the load current by subtracting a low frequency component extracted by the extraction section from the load current detected by the first detection section, and calculate a target value of the compensation current to be added to the load current in order to suppress the high harmonic component;
second calculation section configured to multiply the target value calculated by the first calculation section by a gain including an impedance between the system line and the power converter and a time differential term for the target value, and thereby calculate a target value of a compensation voltage necessary to supply the compensation current of the target value calculated by the first calculation section to the system line; and
drive section configured to drive the power converter in accordance with the target value calculated by the second calculation section, and thereby cause the compensation voltage of the target value to be generated and output by the power converter.

5. The high harmonic suppression device of claim 4, wherein
when the impedance is an interconnection reactor Lac, the gain is a product "Lac × (d/dt)" of the interconnection reactor Lac and a time differential term "d/dt" for the target values Icu', Icv', and Icw',
when the impedance is the interconnection reactor Lac and a resistance R, the gain is "Lac × (d/dt)+R" obtained by adding the resistance R to the product of the interconnection reactor Lac and the time differential term "d/dt", and
when the impedance is an LCL filter composed of the interconnection reactor Lac, a filter capacitor Cf, and a filter reactor Lf, the gain is a product "(Lac+Lf) × (d/dt)" of the interconnection reactor Lac, the filter reactor Lf, and the time differential term "d/dt".

6. The high harmonic suppression device of claim 3, wherein
the control unit further includes:
second detection section configured to detect the compensation current supplied from the power converter to the system line;
third calculation section configured to obtain a deviation between the target value calculated by the first calculation section and a value of the compensation current detected by the second calculation section;
feedback control section configured to obtain the correction value to be added to the target value calculated by the second calculation section by proportional calculation or proportional/integral calculation using the deviation obtained by the third calculation section as an input, such that the deviation obtained by the third calculation section becomes zero; and
addition section configured to add the correction value obtained by the feedback control section to the target value calculated by the second calculation section.

7. The high harmonic suppression device of claim 6, wherein
the feedback control section sums while holding and integrating the deviation obtained by the third calculation section in each cycle of an AC voltage of the AC system, multiplies the multiplication result by a predetermined loop gain, adds the multiplication result to the deviation obtained by the third calculation section, and obtains a correction value to be added to the target value calculated by the second calculation section by proportional calculation or proportional/integral calculation using the addition result as an input such that the deviation obtained by the third calculation section becomes zero.

8. The high harmonic suppression device of claim 7, wherein
the feedback control section adds a lead compensation process for compensating for a delay time of process using the proportional calculation or the proportional/integral calculation to the multiplication result of the loop gain.

9. The high harmonic suppression device of claim 4, wherein
the control unit further includes first band elimination section configured to eliminate a predetermined frequency band of the target value calculated by the first calculation section, and
the second calculation section calculates a target value of a compensation voltage necessary to supply the compensation current of the target value calculated by the first calculation section to the system line, by multiplying the target value which has passed through the first band elimination section by the gain.

10. The high harmonic suppression device of claim 4, wherein
the control section further includes holding section for temporarily holding the target value calculated by the first calculation section in a cycle of the AC voltage of the AC system, and
the second calculation section calculates target values Vcu', Vcv', and Vcw' of compensation voltages Vcu, Vcv, and Vcw necessary to supply the compensation current of the target value calculated by the first calculation section to the system line, by multiplying the target value held by the holding section by the gain.

11. The high harmonic suppression device of claim 6, wherein
the control section further includes second band elimination section for eliminating a predetermined frequency band of values of compensation currents Icu, Icv, and Icw detected by the second detection section, and
the third calculation section obtains deviations ΔIcu, ΔIcv, and ΔIcw between the target values Icu', Icv', and Icw' calculated by the first calculation section and compensation currents Icu, Icv, and Icw which have passed through a process of the second band elimination section.

12. The high harmonic suppression device of one of claims 1 to 9, wherein
the load includes a diode-bridge rectifier circuit which rectifies a voltage of the AC power, a DC capacitor connected to an output terminal of the rectifier circuit via a DC reactor, and an inverter which converts a voltage of the DC capacitor into an AC voltage of a predetermined frequency.
